# EUROPEAN PATENT SPECIFICATION

(11) **EP 3 716 046 B1**
(45) Date of publication and mention of the grant of the patent: **14.09.2022**
(21) Application number: 20153018.5
(22) Date of filing: 22.01.2020
(51) Int. Cl.: G06F 9/30, G06F 9/38

(54) **TECHNOLOGY FOR PROVIDING MEMORY ATOMICITY WITH LOW OVERHEAD**
TECHNOLOGIE ZUR BEREITSTELLUNG VON SPEICHERATOMARITÄT MIT GERINGEM OVERHEAD
TECHNOLOGIE DE FOURNITURE D'ATOMICITÉ DE MÉMOIRE À FAIBLE SURCHARGE

(30) Priority: 28.03.2019 US 201916367409
(43) Date of publication of application: 30.09.2020
(73) Proprietor: INTEL Corporation, Santa Clara, CA 95054 (US)
(72) Inventor: Shevgoor, Manjunath, San Jose, CA 95134 (US); Dechene, Mark Joseph, Hillsboro, OR 97124 (US); Mekkat, Vineeth, San Jose, CA 95132 (US); Agron, Jason Michael, San Jose, CA 95112 (US); Zhang, Zhongying, Portland, OR 97229 (US)
(74) Representative: Samson & Partner Patentanwälte mbB

(56) References cited:
- US-A1- 2011 138 126
- US-A1- 2018 285 112

## Description

### Technical Field

The present disclosure pertains in general to data processing systems and in particular to technology for providing memory atomicity in data processing systems.

### Background

Some processors are capable of performing speculative execution of instructions, while also executing multiple threads simultaneously. For purposes of this disclosure, a sequence of instructions that is executed speculatively may be referred to as a "speculative set." A speculative set may include one or more memory access instructions, such as an instruction to read data from memory (hereinafter a "load" instruction), and/or an instruction to write data to memory (hereinafter a "store" instruction). A processor may use speculative execution to execute instructions in an out-of-order fashion, speculatively in the face of dependencies, exceptions, interrupts, etc. In addition or alternatively, a processor may use speculative execution to execute instructions as part of a transaction that may be committed atomically or rolled back and undone. US 2018/0285112 A1 teaches a method for providing memory atomicity in a data processing system using two shadow registers. A delayed reclamation circuit includes a load/store buffer and allows to temporarily hold memory state values.

To avoid erroneous results, it may be necessary to perform at least some of the instructions in a speculative set atomically, particularly when a processor is executing instructions as part of a transaction. For instance, if the speculative set includes a load operation to load data from a location in memory into a register, another operation to modify that data, and a store operation to write that modified data back to that memory location, it may be necessary to make sure that no other thread is able to read or modify the data in that memory location between the time that the speculative load and the speculative store are executed. For purposes of this disclosure, a sequence of instructions that is to be executed atomically may be referred to as an "atomic region."

When a data processing system is executing one thread while also executing one or more other threads, the other threads may be referred to in general as the "external world," relative to the first thread. When a processor executes an atomic region, the processor may provide the external world with the illusion that all of the instructions in the atomic region were executed simultaneously and/or as a single transaction. In other words, the processor may provide the external world with the illusion of atomic execution of the atomic region. A processor may implement an atomic region by defining or instantiating a transaction that includes the instructions which belong to the atomic region.

In addition, a processor may automatically optimize an instruction stream, and the processor may execute some or all of the optimized instructions instead of the original source instruction stream. For instance, a processor may use binary translation (BT) to convert a region of code from a source program into a corresponding set of optimized instructions. In addition, that set of optimized instructions may include a region of instructions (or multiple different regions of instructions) that needs to be executed atomically to ensure proper results. Accordingly, the processor may create or define a transaction that includes the region of optimized instructions that needs to be executed atomically. In other words, the processor may use a transaction to implement the atomic region. Accordingly, the instructions within that transaction may be referred to as an "atomic region." And when the processor attempts to execute the transaction, the processor will either abort or commit the transaction. If the transaction is aborted, the architectural state of the processor will then appear to the external world as if none of the instructions in the transaction executed. But if the transaction is committed, the architectural state of the processor will then appear to the external world as if all of the instructions in the transaction executed.

From the perspective of the thread executing the atomic region, at intermediate points inside the atomic region, the architectural state of the processor may be inconsistent with (or different from) the state that would have existed had the processor executed the original code stream. However, by using atomic execution, the processor prevents the external world from observing the architectural state of the processor at those intermediate points. Instead, the state is only observable to the external world at predetermined points in the code stream, namely, points outside of atomic regions.

When an atomic region in a transaction includes an instruction to store data at a memory location (or multiple store instructions), atomic execution of that atomic region requires the processor to provide the external world with the illusion that the memory location has been modified if and only if the transaction commits. For purposes of this disclosure, the term "memory atomicity" refers to technology and operations for atomically executing transactions that include memory access instructions.

A conventional processor may include certain types of hardware support for executing atomic regions. For instance, some processors sold by Intel Corporation under the Intel^{®} Xeon^{®} trademark (e.g., the Intel^{®} Xeon^{®} Processor E7-4809 v3) include features for executing atomic regions. Those features are referred to as "Intel^{®} Transactional Synchronization Extensions" or "Intel^{®} TSX." Also, processors developed by Nvidia Corporation under the code names Denver and Carmel may include some hardware support for atomicity. Additional information concerning the Denver processor has been made available by the Stanford Center for Professional Development in a video entitled "Stanford Seminar - Dynamic Code Optimization and the NVIDIA Denver Processor," which is available at www.youtube.com/watch?v=oEuXA0_9feM. Also, processors developed or proposed by Transmeta Corporation (e.g., Efficeon, Astro, Tokamak) may include some hardware support for atomicity, as may processors developed or proposed by Sun (e.g., Rock).

In particular, a conventional processor may include robust memory atomicity (RMA) facilities which enable the processor to execute large atomic regions. However, a significant amount of processing overhead may be required to enable the RMA facilities to manage each different atomic region. For purposes of this disclosure, the processing resources required to enable memory atomicity facilities to manage an atomic region may be referred to as "atomicity overhead." Memory atomicity facilities with significant atomicity overhead (e.g., RMA facilities) may be inefficient when used to execute small atomic regions. For instance, RMA facilities which cause a store buffer entry to become walk enabled, in response to the retirement of the corresponding store instruction may be inefficient when such store instructions are parts of small atomic regions.

### Brief Description of the Drawings

Features and advantages of the present invention will become apparent from the appended claims, the following detailed description of one or more example embodiments, and the corresponding figures, in which:
**Figure 1** is a block diagram depicting an example embodiment of a data processing system with low-overhead memory atomicity facilities.
**Figure 2** is a block diagram depicting one of the processor cores from Figure 1 in greater detail.
**Figure 3** is a block diagram depicting the store buffer from Figure 1 in greater detail.
**Figures 4A-4B** present a flowchart of an example embodiment of a process for providing low-overhead memory atomicity.
**Figure 5** is a block diagram illustrating both an exemplary in-order pipeline and an exemplary register renaming, out-of-order issue/execution pipeline according to embodiments of the invention.
**Figure 6** is a block diagram illustrating both an exemplary embodiment of an in-order architecture core and an exemplary register renaming, out-of-order issue/execution architecture core to be included in a processor according to embodiments of the invention.
**Figures 7 and 8** are block diagrams of a more specific exemplary in-order core architecture, which core would be one of several logic blocks (including other cores of the same type and/or different types) in a chip.
**Figure 9** is a block diagram of a processor that may have more than one core, may have an integrated memory controller, and may have integrated graphics according to embodiments of the invention.
**Figure 10** is a block diagram of a system according to embodiments of the invention.
**Figures 11** **and** **12** are block diagrams of more specific exemplary systems according to embodiments of the invention.
**Figure 13** is a block diagram of a system on a chip according to embodiments of the invention.
**Figure 14** is a block diagram depicting the use of a software instruction converter to convert binary instructions in a source instruction set to binary instructions in a target instruction set according to embodiments of the invention.

### Detailed Description

In some cases, a processor may generate optimized code that includes atomic regions, based on original code that does not include atomic regions. If, as a result of the atomicity overhead, the atomicity facilities in the processor take longer to execute the optimized code than the processor would have taken to execute the original code, the atomicity facilities may be considered inefficient, with regard to that code. As indicated above, RMA facilities may be inefficient when used to execute small atomic regions. The present disclosure describes a processor with low-overhead memory atomicity facilities. As described in greater detail below, the low-overhead memory atomicity facilities may be more efficient than RMA facilities for processing relatively small atomic regions.

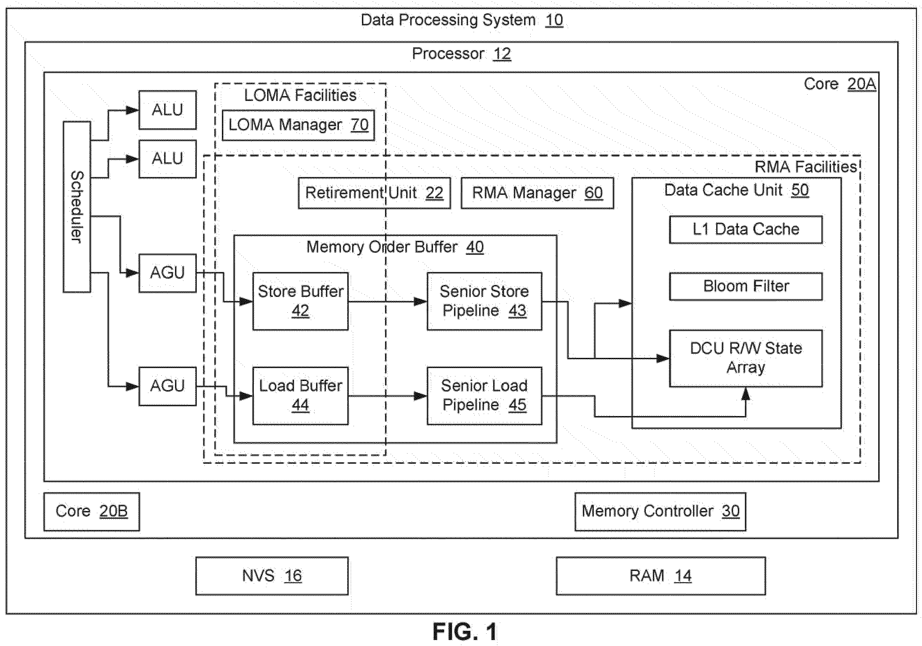

**Figure 1** is a block diagram depicting an example embodiment of a data processing system 10 with low-overhead memory atomicity (LOMA) facilities. Data processing system 10 includes an out-of-order central processing unit (CPU) or processor 12. For purposes of illustration, processor 12 is depicted as including cores 20A and 20B, and a memory controller 30 that all reside in the same chip or in the same package. However, in alternative embodiments, data processing systems may include one or more processors, and each processor may include one or more cores. In addition or alternatively, a data processing system may include multiple processors which reside in separate chips or packages. Similarly, the memory controller in a data processing system may reside in a separate chip or in a separate package.

As illustrated, data processing system 10 also includes random access memory (RAM) 14 and non-volatile storage (NVS) 16 responsive to processor 12. NVS 16 includes various software components, such as an operating system (OS) and user applications. Processor 12 may copy software from NVS 16 to RAM 14 for execution. Core 20B may include features that are the same as or similar to the features of core 20A.

In the embodiment of Figure 1, core 20A includes various processing resources, such as a scheduler, one or more arithmetic logic units (ALUs), one or more address generation units (AGUs), a memory order buffer (MOB) 40, a data cache unit (DCU) 50, a retirement unit 22, etc. Also, as will be apparent to those of ordinary skill in the art, processor 12 may include numerous additional components that are not shown in Figure 1. For instance, the components of core 20A may be part of a memory execution unit (MEU) that also includes a reorder buffer (ROB), and memory controller 30 may be part of an uncore or system agent.

As illustrated, MOB 40 includes a store buffer (SB) 42 and a load buffer (LB) 44. Core 20A also includes a senior store pipeline (SSP) 43 and a senior load pipeline (SLP) 45. Retirement unit 22, SSP 43, and SLP 45 are mechanisms that interact with the buffers and other structures in core 20A. For instance, retirement unit 22 may be involved with the progress and reclamation of buffers within core 20A in connection with both memory operations and register operations. For example, retirement unit 22 may include control logic for determining when to retire instructions and when to commit transactions. Also, DCU 50 may include control logic for notifying retirement unit 22 whether or not a commit operation was completed successfully. Similarly, SSP 43 may include control logic which causes SSP 43 to read an entry out of SB 42 and to interact with DCU 50 (e.g., the control logic may write the data from the SB entry to DCU 50). And if that interaction is successful, SSP 43 may deallocate the entry from SB 42 at the end of the pipeline. The process of reading an entry out of SB 42, interacting with (e.g., writing to) DCU 50, and deallocating the entry from SB 42 may be referred to as "walking SSP 43" or "walking the pipeline." But of the interaction is unsuccessful, SSP 43 may try the walk again later. Similarly, SLP 45 interacts with LB 44 and with a read/write (R/W) state array in DCU 50. In the embodiment of Figure 1, SSP 43 and SLP 45 are depicted within MOB 40, but in other embodiments, the SSP and the SLP may be implemented outside of the MOB, for instance as independent entities or as part of the DCU. In the embodiment of Figure 1, DCU 50 includes a first level (L1) data cache, as well as structures to support memory atomicity, such as a bloom filter and the DCU R/W state array.

SSP 43 follows a specific order when processing entries from SB 42, from oldest retired store to youngest retired store. If the pipeline walk has a problem with one of the retired stores, the process stops. Younger stores do not skip older ones. In some cases, it takes a significant amount of time for all of the retired stores to complete their walks down SSP 43.

Core 20A also includes two different memory atomicity managers which core 20A uses, in different circumstances, to provide for atomic execution of atomic regions of code in general, and to provide for memory atomicity in particular. Each of those memory atomicity managers may provide core 20A with capabilities such as those associated with the technology described by Intel Corporation under the name or trademark of Intel^{®} Transactional Synchronization Extensions (TSX). For instance, each of the memory atomicity managers may provide for execution of atomic regions in connection with Hardware Lock Elision (HLE) and/or in connection with Restricted Transactional Memory (RTM).

In the embodiment of Figure 1, those two memory atomicity managers are an RMA manager 60 and a LOMA manager 70. As described in greater detail below, RMA manager 60 cooperates with other components of core 20A to provide for robust memory atomicity, but with significant atomicity overhead, whereas LOMA manager 70 cooperates with other components of core 20A to provide for memory atomicity that is less robust, with much lower atomicity overhead. In other words, LOMA manager 70 provides for low-overhead memory atomicity.

For purposes of this disclosure, a memory atomicity manager and the processor components which cooperate with that memory atomicity manager to provide core 20A with memory atomicity capabilities may be referred to collectively as "memory atomicity facilities." In particular, the components of core 20A which cooperate to provide RMA may be referred to as "RMA facilities," and the components which cooperate to provide LOMA may be referred to as "LOMA facilities." Also, when core 20A is using the RMA facilities (e.g., RMA manager 60) to manage atomicity, the RMA facilities may be said to be engaged. And when core 20A is using the LOMA facilities (e.g., LOMA manager 70) to manage atomicity, the LOMA facilities may be said to be engaged. In one embodiment or scenario, core 20A disengages or disables the RMA facilities when the LOMA facilities are engaged, and core 20A disengages or disables the LOMA facilities when the RMA facilities are engaged.

For purposes of illustration, Figure 1 depicts an embodiment in which different portions of the control logic of the memory atomicity facilities reside in particular components of core 20A. However, in other embodiments, the control logic of the memory atomicity facilities may be distributed differently. In other words, different portions of the memory atomicity control logic may reside in different components in different embodiments. For example, as described in greater detail below, in the embodiment of Figure 1, RMA manager 60 is a distinct component containing control logic which causes each LB entry to be deallocated from LB 44 in connection with the retirement of the associated instruction. However, in other embodiments, some or all of that control logic may reside in one or more other components (e.g., in LB 44 and/or in another part of MOB 40). Accordingly, that control logic may be referred to more generally as "RMA management logic," whether that logic resides in a single component or in multiple components. As another example, in the embodiment of Figure 1, LOMA manager 70 is a distinct component containing control logic which cooperates with other components, such as retirement unit 22 and MOB 40. However, in other embodiments, some or all of that control logic may reside in another component (e.g., in retirement unit 22 and/or in MOB 40). Accordingly, for purposes of this disclosure, that control logic may be referred to more generally as "LOMA management logic," whether that logic resides in a single component or in multiple components.

In the embodiment of Figure 1, as indicated by the box with dashed outlines and the label "LOMA Facilities," the features that core 20A uses to provide for LOMA include SB 42, LB 44, and LOMA manager 70. By contrast, as indicated by the box with dashed outlines and the label "RMA Facilities," the features that core 20A uses to provide for RMA include DCU 50, SSP 43, SLP 45, SB 42, LB 44, and RMA manager 60.

Retirement unit 22 is also intimately involved with RMA, so a portion of retirement unit 22 is depicted as part of the RMA facilities. In particular, when the RMA facilities are engaged, retirement unit 22 and DCU 50 use two-way communications to handle commits, with retirement unit 22 notifying DCU 50 that a transaction should be committed, and with DCU 50 notifying retirement unit 22 either that DCU 50 was able to successfully complete the commit or that the transaction should be (or has been) aborted. By contrast, when the LOMA facilities are engaged, retirement unit 22 and DCU 50 may only use one-way communications, with retirement unit 22 notifying DCU 50 that a transaction is being committed. In addition, retirement unit 22 is involved with LOMA For instance, as described in greater detail below, when the LOMA facilities are engaged, retirement unit 22 may cause updates to a commit pointer in SB 42. Consequently, in Figure 1, a portion of retirement unit 22 is depicted as part of the LOMA facilities.

In the embodiment of Figure 1, RMA manager 60 provides for DCU-based memory atomicity, because RMA manager 60 uses DCU 50 (a) to hold all of the store data produced within an atomic region, (b) to track the data that has been read within the atomic region, and (c) to provide the mechanism to either discard all memory operations or make them all observable at once.

By contrast, LOMA manager 70 uses a technique called "delayed reclamation" to shift at least some of the memory atomicity management features from DCU 50 into LB 44 and SB 42. Nevertheless, the delayed reclamation technique makes execution of memory instructions appear atomic to the external world, in that all memory instructions from within an atomic region appear to occur as an indivisible unit of instructions. All loads and stores from within the atomic region appear to occur as a unified group, either before or after load and store instructions from other processing threads.

More specifically, RMA manager 60 uses the L1 data cache in DCU 50 to track the memory state of large atomic regions on a line-by-line basis. If the L1 data cache becomes too full to track state for atomic reads, DCU 50 evicts lines that then enter the bloom filter. On the other hand, if the L1 data cache becomes too full to track state for atomic writes, the associated atomic region is aborted. Thus, DCU 50 plays a key role in managing atomicity for an atomic region.

However, DCU 50 has high overhead requirements, to prepare it to receive atomic region information, and to enable it to maintain data coherently. For instance, DCU 50 may follow the "modified exclusive shared invalid" (MESI) protocol, and DCU 50 may use operations such as (a) issuing M-to-E conversions for the DCU R/W state array and (b) copying M data to the mid-level cache (MLC) to maintain data coherently. As soon as a load or a store retires, RMA manager 60 may cause that retired load or store to enter SLP 45 or SSP 43, and RMA manager 60 may use DCU 50 to track atomicity for the retired load or store.

Additionally, as part of the commit process, the RMA facilities may require a full set of cache updates (and/or other cache operations) to be completed successfully before the commit can be considered complete, and therefore committed. Also, one or more of the resources that DCU 50 uses during the atomic commit process may be unique (i.e., not duplicated), which can require serialization that impacts subsequent atomic regions which need to use those same resources. The delay or penalty experienced due to this type of serialization may be amplified if atomic regions are small, and even more so if they are processed back-to-back. Consequently, RMA manager 60 may not be performant (relative to LOMA manager 70 or relative to facilities for executing unoptimized code) at executing frequent, small, atomic regions back-to-back. Moreover, BT may create optimized code which includes frequent, back-to-back atomic regions. Consequently, RMA manager 60 may not be performant (relative to LOMA manager 70) for processing code that has been optimized using BT. Additionally, since the atomically written lines are required to be held within DCU 50, RMA manager 60 may be limited with regard to the patterns of memory writes that can be accommodated within a single atomic region.

For reasons such as those set forth above, when core 20A uses RMA manager 60 to manage execution of an individual atomic region, core 20A expends or consumes a significant amount of atomicity overhead. However, if an atomic region is large, a significant portion of the atomicity overhead may be amortized over a large number of instructions. In such cases, RMA manager 60 may be considered efficient and/or performant (relative to the LOMA facilities and/or relative to unoptimized code). However, when RMA manager 60 is used to manage execution of an atomic region that is small, RMA manager 60 may be inefficient (relative to LOMA manager 70 and/or relative to unoptimized code).

By contrast, when core 20A uses LOMA manager 70 to manage execution of an atomic region, the LOMA facilities do not expend or consume a significant amount of atomicity overhead. In particular, LOMA manager 70 does not require significant processing overhead to manage an atomic region. Therefore, LOMA manager 70 may be efficient when used to manage execution of small atomic regions. However, the capabilities of the LOMA facilities are not as robust as those of the RMA facilities. For instance, the LOMA facilities may be unable to effectively handle large atomic regions.

The dividing line between "small" and "large" atomic regions and "efficient" or "inefficient" memory atomicity facilities may differ in different embodiments or scenarios, depending on factors such as the sizes of the LB and the SB. Other relevant factors may include the size of the DCU and the specific instructions (or types of instructions) within a particular atomic region. In one embodiment or scenario, an atomic region of under about 30 instructions may generally be considered small, with such a region being handled more efficiently by LOMA facilities than by RMA facilities. In another embodiment or scenario, an atomic region of under about 50 instructions may generally be considered small, with such a region being handled more efficiently by LOMA facilities than by RMA facilities. In another embodiment or scenario, an atomic region of under about 100 instructions may generally be considered small, with such a region being handled more efficiently by LOMA facilities than by RMA facilities. The dividing line in other embodiments or scenarios may be even larger.

As described in greater detail below, one way that LOMA manager 70 enhances efficiency is to avoid SLP walks by keeping retired loads for an atomic region in LB 44 until that atomic region commits. Another way is to allow the atomic region to commit before SSP walks have occurred by keeping all stores in the region in SB 42 until the region commits. Once the region commits, the loads and stores for the region are guaranteed by the hardware to occur. Thus, LOMA manager 70 uses SB 42 and LB 44 to manage atomicity protections, and the data protection never needs to be transferred into DCU 50. However, because of the way it uses SB 42 and LB 44, LOMA manager 70 may be unable to provide atomicity protection for an atomic region with (a) more loads than the number of entries in LB 44 or (b) more stores than the number of entries in SB 42.

In the embodiment of Figure 1, the performance overhead of entering and exiting an atomic region managed by LOMA manager 70 is effectively zero. Consequently, LOMA manager 70 may be well suited to handling code with many small atomic regions, such as optimized code generated by BT. In addition, LOMA manager 70 does not require an atomic region to have any particular memory pattern. By contrast, RMA manager 60 may require an atomic region to have a particular memory pattern to fit within DCU 50, because of the set/way confines of DCU 50. For example, if DCU 50 provides a four-way set associative cache, an atomic region which writes five addresses that all map to the same DCU set would potentially not be compatible with RMA (because all updates couldn't be held within the cache simultaneously in speculative form). However, LOMA may avoid such address-based restrictions. When LOMA manager 70 is managing an atomic region (the "present region"), SB 42 can hold atomic writes for the present region, while DCU 50 effectively holds cache lines in the "M" state ("M-lines") that are being written to by the present atomic region without needing to constantly or frequently evict the M-lines from a prior atomic region to make room for writes from the present atomic region.

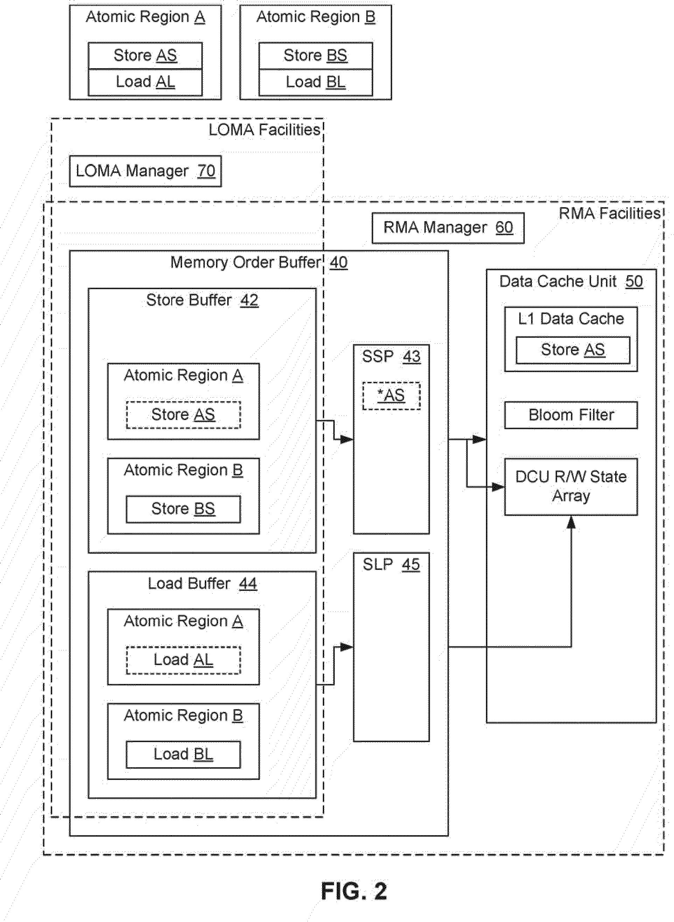

**Figure 2** is a block diagram depicting certain aspects of core 20A from Figure 1 in greater detail. In addition, Figure 2 illustrates a hypothetical scenario involving two different atomic regions, labeled "Atomic Region A" and "Atomic Region B," respectively. In particular, Figure 2 illustrates some of the differences between how RMA manager 60 and LOMA manager 70 operate, with Atomic Region A being handled by RMA manager 60, and Atomic Region B being handled by LOMA manager 70.

For instance, in one embodiment, core 20A supports simultaneous multithreading, and it can buffer hundreds of instructions. And in one scenario, Atomic Region A is part of a thread that is using RMA, while Atomic Region B is part of a different thread that is using LOMA. In another scenario, a single thread includes one or more RMA regions, as well as one or more LOMA regions. Atomic Region A may be one of those RMA regions, and Atomic Region B may be one of those LOMA regions.

As illustrated, Atomic Region A includes a load instruction labeled "Load AL" and a store instruction labeled "Store AS." In those labels, the "A" in "AL" and "AS" denotes "Atomic Region A", the "L" denotes load, and the "S" denotes store. Similarly, Atomic Region B includes two instructions: "Load BL" and "Store BS." Each atomic region may also include additional instructions. However, for purposes of illustration, those instructions are not shown in Figure 2. Also, the instructions within an individual atomic region may be referred to collectively as a transaction. For instance, retirement unit 22 may commit an atomic region by committing the transaction associated with that atomic region.

For purposes of illustration, Figure 2 depicts a scenario in which retirement unit 22 has retired both of the illustrated instructions for both of the atomic regions, but retirement unit 22 has not yet committed the transactions associated those atomic regions. Retirement unit 22 may determine whether or when to commit a transaction based at least in part on information from MOB 42, for instance. For purposes of this disclosure, when an instruction retires, the entries in SB 42 and LB 44 for that instruction may also be said to retire. And when a transaction commits, the associated instructions and buffer entries may also be said to commit.

One of the features of RMA manager 60 is that it causes each LB entry to be deallocated from LB 44 once the associated instruction retires, even if the associated atomic region has not yet committed. Accordingly, as illustrated in Figure 2 using boxes with dashed outlines, RMA manager 60 has deallocated "Load AL" from LB 44.

Another feature of RMA manager 60 is that it makes each SB entry eligible to start its senior pipeline walk when it retires, even if the associated atomic region has not yet committed. And RMA manager 60 causes SB 42 to deallocate or discard the entry once the entry's senior pipeline walk completes. In the scenario of Figure 2, the "Store AS" buffer entry has completed its SSP walk. Accordingly, as shown in DCU 50, core 20A has stored the data from the "Store AS" instruction in the L1 data cache. And as illustrated using a box with a dashed outline, RMA manager 60 has deallocated the "Store AS" entry from SB 42. Also, within SSP 43, Figure 2 uses a box with a dashed outline and the content "^{∗}AS" to indicate that the "Store AS" entry from SB 42 has already walked SSP 43.

Another feature of RMA manager 60 is that it allows retirement unit 22 to commit an atomic region only after all of the associated SB entries have completed their SSP walks. In addition, RMA manager 60 does not allow the next atomic region to begin executing until after all of SB entries in the current region have completed their SSP walks.

One of the features of LOMA manager 70, by contrast, is that, instead of causing an SB entry to start its senior pipeline walk when it retires (even if the associated atomic region has not yet committed), LOMA manager 70 keeps those buffer entries in SB 42 until retirement unit 22 commits the associated atomic region. Accordingly, Figure 2 shows that SB 42 still includes a "Store BS" buffer entry.

Another feature of LOMA manager 70 is that, instead of causing each LB entry to be deallocated from LB 44 once that entry retires (even if the associated atomic region has not yet committed), LOMA manager 70 keeps those buffer entries in LB 44 until the associated atomic region commits. Accordingly, Figure 2 shows that LB 44 still contains the "Load BL" entry. However, in one embodiment, SLP 45 processes RMA loads, but it does not process LOMA loads.

Other features of LOMA manager 70 pertain to the operations performed in response to commit of an atomic region (which can only happen after all loads and stores in that region have retired). When an atomic region commits, LOMA manager 70 causes all of the load buffer entries for that region to be discarded (i.e., deallocated) from LB 44. Additionally, when an atomic region commits, LOMA manager 70, in one fell swoop, causes all of the SB entries for that region to become walk enabled. (By contrast, RMA manager 60 allows SB entries to become senior and walk enabled individually, as each entry retires.)

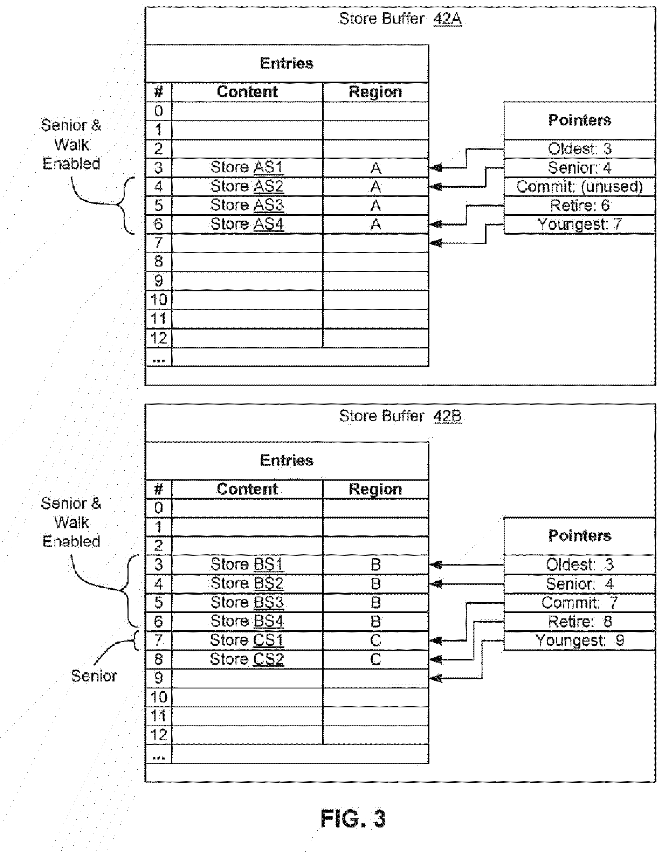

**Figure 3** is a block diagram depicting SB 42 in greater detail. More specifically, Figure 3 depicts SB 42 in two different scenarios, with SB 42 labeled as "SB 42A" in the first scenario and labeled as "SB 42B" in the second scenario. In particular, the first scenario involves core 20A using the RMA facilities to manage atomicity, and the second scenario involves core 20A using the LOMA facilities to manage atomicity. However, in either scenario, as illustrated, the SB includes a number of SB entries, as well as a number of SB pointers, including an oldest pointer, a senior pointer, a retire pointer, and a youngest pointer. The SB also includes a commit pointer, but that pointer may remain unused when the RMA facilities are managing atomicity. In addition or alternatively, some or all of those pointers (e.g., the senior pointer) may reside in SSP 43.

More specifically, SB 42A depicts a scenario in which core 20A has executed four store instructions in Atomic Region A. The data from those instructions is depicted in entries 3-6 of SB 42A as "Store AS1," "Store AS2," "Store AS3," and "Store AS4." In addition, retirement unit 22 has retired the first three instructions, but retirement unit 22 has not committed Atomic Region A. The buffer entries for the three retired instructions may be referred to as "senior stores," as described in greater detail below. Also, the "Store AS1" entry is currently walking SSP 43, and SSP 43 has a pointer to the next store to be read out of SB 42A and sent down the pipeline. That pointer may be referred to as the "senior pointer," and it may match the senior pointer in SB 42A. In the present scenario, the senior pointer points to the "Store AS2" entry, in entry #4. SSP 43 may advance the senior pointer one entry every cycle. However, if an entry is unable to successfully complete the pipeline walk, the senior pointer will be reset back to the oldest pointer, and that entry will try again to walk the pipeline. When an SB entry completes the pipeline walk, SSP 43 discards that entry from the SB and advances the oldest pointer. When the senior pointer reaches the retire pointer, there are no senior stores to send down the senior store pipeline. Accordingly, since the "Store AS4" entry has not been retired yet, but will be the next instruction to retire, the retire pointer points to entry #6.

For purposes of this disclosure, an entry in a buffer such as SB 42 or LB 44 may be referred to as "senior" if the retire pointer for that buffer has advanced past that entry, which typically happens when retirement unit 22 retires the instruction associated with that entry. Accordingly, an entry in SB 42 that is behind the retire pointer for SB 42 may be referred to as a "senior store," as indicated above. In other words, an entry in SB 42 becomes senior when the retire pointer for SB 42 advances past that entry. The senior pointer, by contrast, does not directly affect whether or not an entry is considered senior (even though the senior pointer will either point to (a) an entry that is senior or (b) the same entry as the retire pointer). Instead, as indicated above, the senior pointer is used to keep track of which entry should be the next entry to walk the pipeline (if any such entry is ready to walk the pipeline).

As indicated above, when core 20A is using the RMA facilities to manage atomicity, RMA manager 60 makes each SB entry eligible to start its senior pipeline walk when it retires, even if the associated atomic region has not yet committed. SB 42A illustrates how RMA manager 60 manages the content data and the pointer data in the SB to accomplish those results.

By contrast, SB 42B depicts a scenario in which core 20A has executed four store instructions in Atomic Region B and two store instructions in Atomic Region C. The data from Atomic Region B is depicted in entries 3-6 of SB 42B as "Store BS1" through "Store BS4." The data from Atomic Region C is depicted in entries 7-8 of SB 42B as "Store CS1" and "Store CS2." In addition, retirement unit 22 has retired all four instructions from Atomic Region B and the first instruction from Atomic Region C. Also, retirement unit 22 has committed Atomic Region B, but not Atomic Region C. The buffer entries for all of the retired instructions may be referred to as "senior stores." However, as indicated above, when the LOMA facilities are managing atomicity, the LOMA facilities (e.g., retirement unit 22 and SSP 43) keep buffer entries for senior stores in the SB until retirement unit 22 commits the associated atomic region. For instance, retirement unit 22 may use the commit pointer to keep senior stores in the SB until the associated atomic region has been committed.

In particular, as long as SSP 43 does not reach the commit pointer, SSP 43 operates basically as described above with regard to SB 42A, reading the next entry to send down the pipeline from the entry pointed to by the senior pointer, advancing the senior store pointer by one every cycle, etc. However, instead of stopping at the retire pointer, the LOMA facilities will cause SSP 43 to stop walking SB entries when the senior pointer reaches the commit pointer.

Also, when retirement unit 22 commits a region, retirement unit 22 causes the SB to advance the commit pointer just past the last entry for that region. For instance, in SB 42B, when retirement unit 22 committed Atomic Region B, LOMA manager 70 and retirement unit 22 caused SB 42B to advance the commit pointer in one fell swoop from entry #3 to entry #7. In effect, this advancement may be referred to as making a large number of senior stores "walk enabled" in a single step. The stores that are senior and walk enabled will then advance down SSP 43, one at a time. Accordingly, as illustrated in SB 42B, since the commit pointer points to entry #7, entries 3-6 are senior and walk enabled. And entry #7 is senior but not walk enabled, because the retire pointer points to entry #8, but the commit pointer is still waiting at entry #7.

In particular, in one embodiment, LOMA manager 70 and retirement unit 22 cooperate to cause SB 42B to advance the commit pointer from entry #3 to entry #7. LOMA manager 70 participates in that process at least in part by engaging or "turning on" the LOMA facilities, and retirement unit 22 participates at least in part by determining the new value for the commit pointer (or by determining an additive value to be added to the current commit pointer) and sending that value to SB 42B. In other words, retirement unit 22 feeds information or data to the LOMA management logic, which (a) makes decisions based on that data and then (b) interacts with control logic in MOB 40 (e.g., by sending data to SB 42).

For comparison, referring again to Figure 1, if core 20A is using RMA manager 60 to manage atomicity, when retirement unit 22 retires an instruction associated with an SB entry, retirement unit 22 and/or SB 42 makes that SB entry "senior" by incrementing the retirement pointer in SB 42. And since the RMA facilities do not use the commit pointer, making an entry senior also makes it "walk enabled." By contrast, if core 20A is using LOMA manager 70 to manage atomicity, when retirement unit 22 commits an atomic region, retirement unit 22 makes all of the SB entries associated with that region walk enabled in bulk, by incrementing the commit pointer by the number of stores within the atomic region.

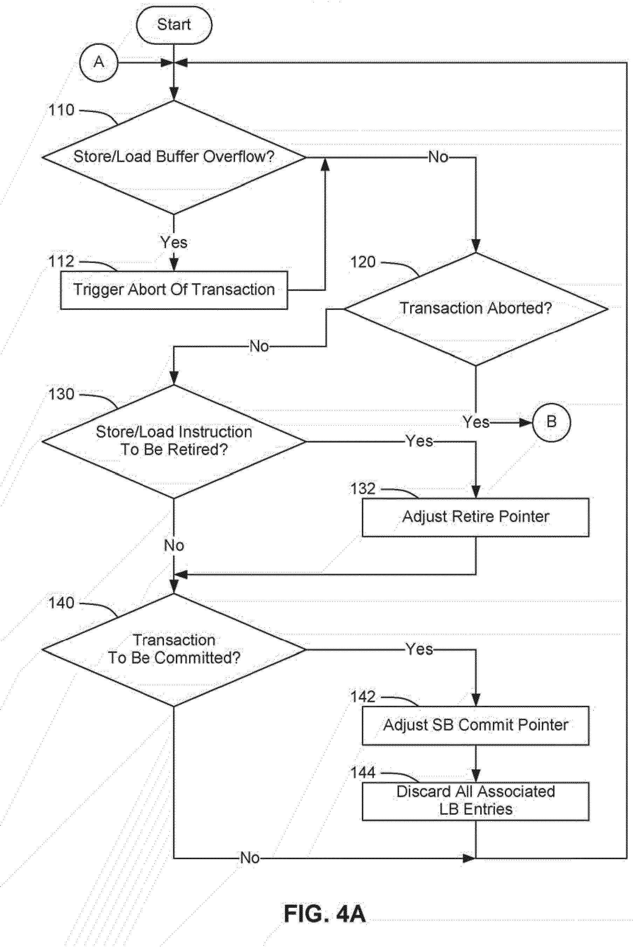

**Figures 4A-4B** present a flowchart of an example embodiment of a process for providing low-overhead memory atomicity. The process is described with regard to the embodiment of Figure 1, in the context of a scenario in which core 20A has used BT to generate optimized code that includes atomic regions, based on original unoptimized code. Figures 4A-4B illustrate some of the operations that the LOMA facilities (e.g., LOMA manager 70) may perform when core 20A is executing instructions from the optimized code. For instance, as shown at block 110, LOMA manager 70 may determine whether execution of an instruction has caused an overflow condition for SB 42 or LB 44. For example, execution of an instruction may cause an overflow condition for SB 42 if that instruction is a store instruction but SB 42 is already full. Similarly, executing a load instruction when LB 44 is already full may also cause an overflow condition. In some embodiments, the SB and the LB each have space for tens or hundreds of entries, and can therefore accommodate atomic regions with tens or hundreds of instructions.

If LOMA manager 70 has detected an overflow condition, LOMA manager 70 may trigger an abort for the transaction associated with the instruction which caused the overflow condition, as shown at block 112.

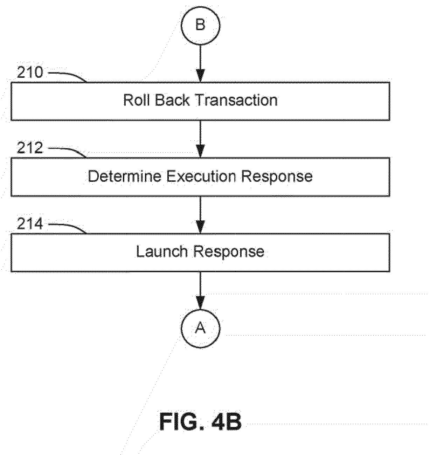

Whether or not an overflow was detected, LOMA manager 70 may then determine whether a transaction has been aborted, as shown at block 120. If a transaction has been aborted, the process may pass through page connecter B to Figure 4B. As shown at block 210, in response to the abort, LOMA manager 70 may roll back the atomic region's updates, to return the architectural state of core 20A to a safe point, relative to the code stream from which the atomic region came. For instance, LOMA manager 70 may, in effect, undo all of the updates made by the atomic region since the start of the transaction. As shown at block 212, LOMA manager 70 may then determine a code set to be executed to achieve the results that were intended to be achieved by the transaction that was aborted. That code set may be referred to as the "execution response." For instance, a rollback handler in LOMA manager 70 may determine (a) whether to retry the original transaction as-is, (b) whether to try a new code set that differs from the original code set (e.g., the new code set may be smaller, etc.), or (c) whether to try a code set without atomicity support enabled. As shown at block 214, LOMA manager 70 may then lunch the execution response. The process may then return to Figure 4A via page connector A. However, in other embodiments or scenarios, a different component may be involved with determining the mechanism or approach to use for forward progress after transaction abort and rollback, depending on the application/systems programming model being used by the data processing system. For instance, such determinations may be controlled by another part of the processor hardware, by a BT system, or by the application program itself.

Referring again to block 120 of Figure 4A, if no abort was detected, retirement unit 22 may determine whether to retire a store instruction or a load instruction, as shown at block 130. If a store or load instruction is to be retired, retirement unit 22 may adjust the retire pointer in the relevant buffer, as shown at block 132. For instance, referring again to Figure 3, when retirement unit 22 retires the instruction associated with Store CS2, retirement unit 22 may cause SB 42A adjust the retire pointer from 8 to 9.

As shown at block 140, retirement unit 22 may also determine whether to commit a transaction. As shown at block 142, if a transaction is to be committed, and if the atomic region associated with that transaction included any store instructions, retirement unit 22 may adjust the commit pointer in SB 42 accordingly, as indicated above. That is, retirement unit 22 may cause SB 42 to increment the commit pointer by the number of stores within the atomic region. Also, as shown at block 144, if the atomic region included any load instructions, retirement unit 22 may discard all of the entries in LB 44 associated with that atomic region. Retirement unit 22 may also adjust the pointers in LB 44 accordingly.

The process may then return to block 110, with LOMA manager 70 continuing to manage memory atomicity as indicated above.

Thus, LOMA manager 70 keeps all stores for an atomic region in SB 42 until the atomic region commits. LOMA manager 70 thereby enables retirement unit 22 to commit an atomic region before all of the SB entries for the previous atomic region have completed their senior store pipeline walks.

Also, as indicated above, LOMA manager 70 keeps retired loads in LB 44 after they have retired, until the associated atomic region commits. LOMA manager 70 thereby enables core 20A to avoid the senior load pipeline walks.

As has been described, a data processing system may include low-overhead memory atomicity facilities, and those facilities may include a LOMA manager which uses delayed reclamation to make execution of memory instructions appear atomic to the external world. For instance, the LOMA manager may delay reclamation of any SB and/or LB entries associated with an atomic region until that atomic region has been committed.

### Additional Embodiments

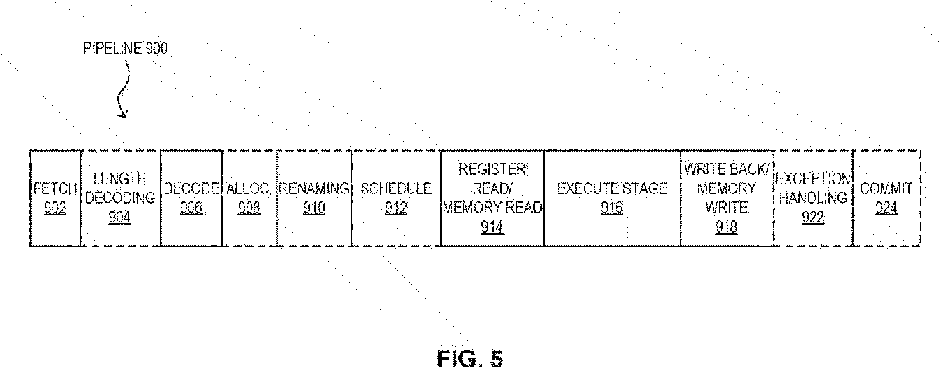

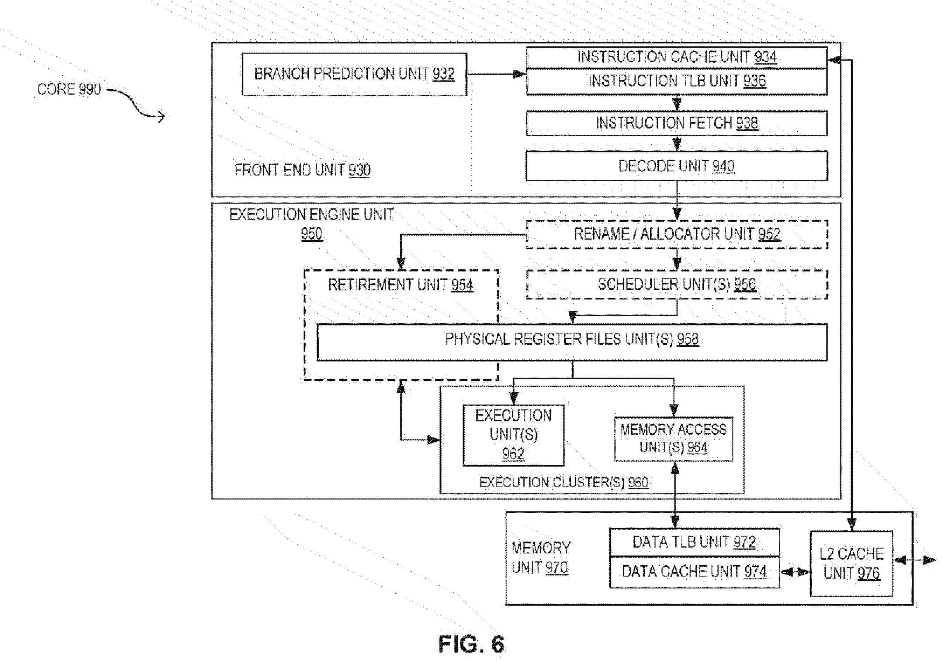

**Figure 5** is a block diagram illustrating both an exemplary in-order pipeline and an exemplary register renaming, out-of-order issue/execution pipeline according to embodiments of the invention. **Figure 6** is a block diagram illustrating both an exemplary embodiment of an in-order architecture core and an exemplary register renaming, out-of-order issue/execution architecture core to be included in a processor according to embodiments of the invention. The solid lined boxes in Figures 5 and 6 illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 5, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

Figure 6 shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, a compression engine, a coprocessor core, a general-purpose graphics processing unit (GPGPU), a graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964.

The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 performs the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

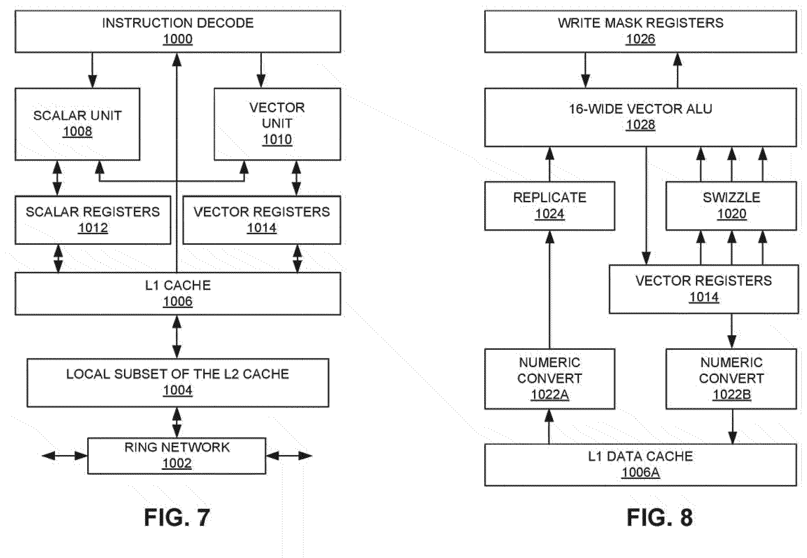

**Figures 7 and 8** are block diagrams of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 7 is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from an L1 cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 8 is an expanded view of part of the processor core in Figure 7 according to embodiments of the invention. Figure 8 includes an L1 data cache 1006A part of the L1 cache 1004, as well as more detail regarding the vector unit 1010 and the vector registers 1314. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

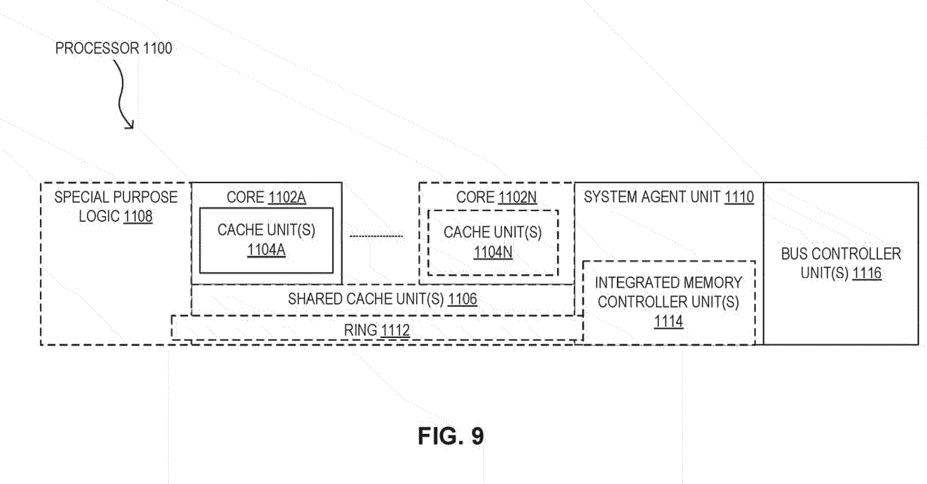

**Figure 9** is a block diagram of a processor 1100 that may have more than one core, may have an integrated memory controller, and may have integrated graphics according to embodiments of the invention. The solid lined boxes in Figure 9 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU, a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of cache units 1104A-N within the cores, a set or one or more shared cache units 1106, and external memory (not shown) coupled to the set of integrated memory controller units 1114. The set of shared cache units 1106 may include one or more mid-level caches, such as L2, level 3 (L3), level 4 (L4), or other levels of cache, a last level cache (LLC), and/or combinations thereof. While in one embodiment a ring based interconnect unit 1112 interconnects the special purpose logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102 A-N.

The system agent unit 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set. Such cores 1102A-N may convert certain memory access instructions into subline memory access instructions as described herein.

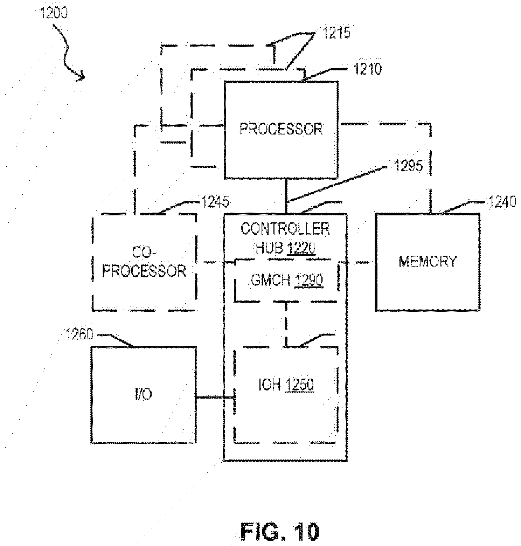

**Figures 10-13** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

**Figure 10** is a block diagram of a system 1200 according to embodiments of the invention. The system 1200 may include one or more processors 1210, 1215, which are coupled to a controller hub 1220. In one embodiment, the controller hub 1220 includes a graphics memory controller hub (GMCH) 1290 and an Input/Output Hub (IOH) 1250 (which may be on separate chips); the GMCH 1290 includes a memory controller to control operations within a coupled memory and a graphics controller to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in Figure 10 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

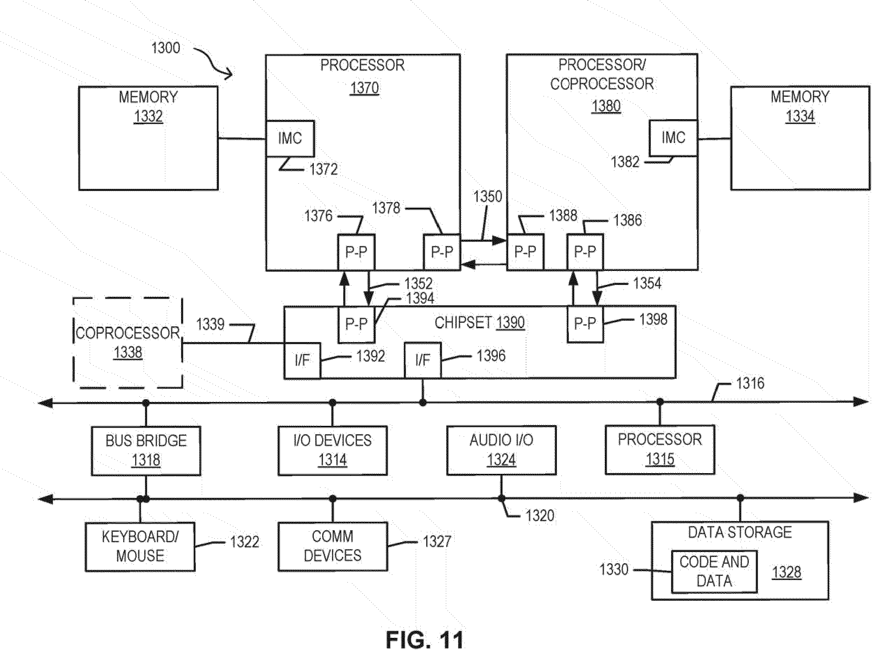

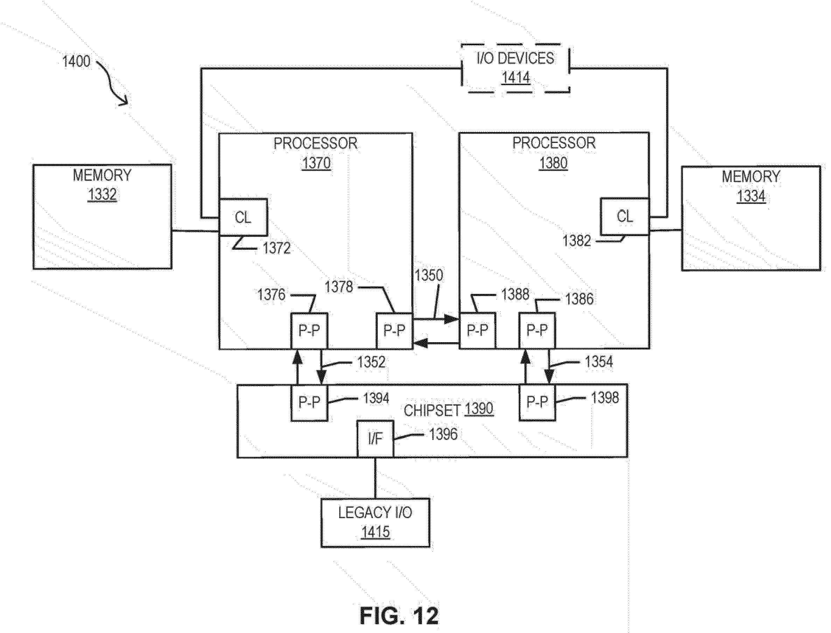

**Figures 11** **and** **12** are block diagrams of more specific exemplary systems 1300 and 1400 according to embodiments of the invention. As shown in Figure 11, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 and coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a P-P interface 1350 using P-P interface circuits 1378, 1388. As shown in Figure 11, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in Figure 11, various I/O devices 1314 may be coupled to first bus 1316, along with a bus bridge 1318 which couples first bus 1316 to a second bus 1320. In one embodiment, one or more additional processors 1315, such as coprocessors, high-throughput MIC processors, GPGPUs, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 11, a system may implement a multi-drop bus or other such architecture.

**Figure 12** presents a block diagram of a second more specific exemplary system 1400 in accordance with an embodiment of the present invention. Like elements in Figures 11 and 12 bear like reference numerals, and certain aspects of Figure 11 have been omitted from Figure 12 in order to avoid obscuring other aspects of Figure 12.

Figure 12 illustrates that the processors 1370, 1380 may include integrated memory and I/O control logic ("CL") 1372 and 1382, respectively. Thus, the CL 1372, 1382 include integrated memory controller units and include I/O control logic. Figure 12 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

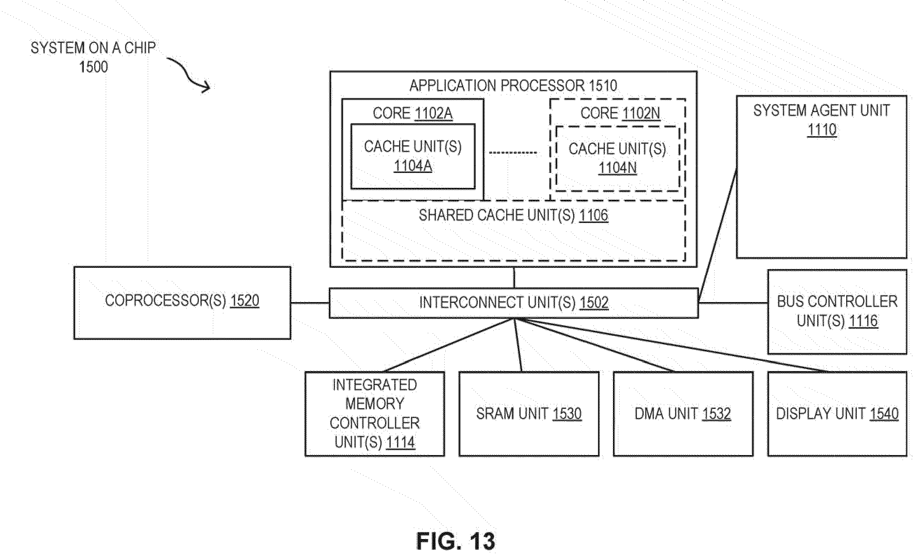

**Figure 13** is a block diagram of a system on a chip (SoC) 1500 according to embodiments of the invention. Dashed lined boxes are optional features on more advanced SoCs. In Figure 13, an interconnect unit(s) 1502 is coupled to: an application processor 1510 which includes a set of one or more cores 1102A-N (including constituent cache units 1104A-N) and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

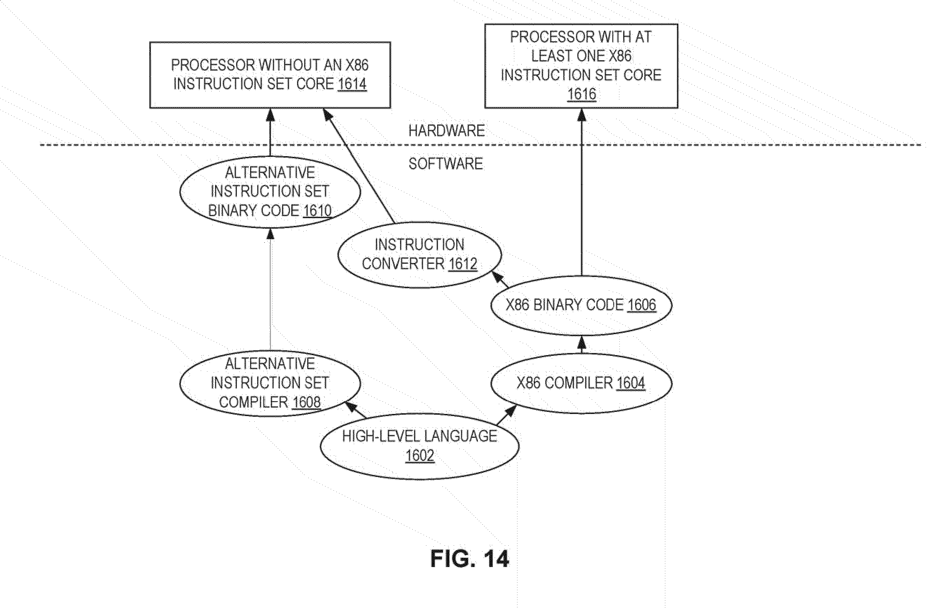

**Figure 14** is a block diagram depicting the use of a software instruction converter 1612 to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 14 shows a program in a high-level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, Figure 14 shows the program in the high-level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

### Conclusion

Although certain example embodiments are described herein, one of ordinary skill in the art will understand that those example embodiments may easily be divided, combined, or otherwise altered to implement additional embodiments. Thus, the present teachings are not limited to the embodiments and/or scenarios described herein, but may be used to advantage in a wide variety of embodiment and scenarios.

In the present disclosure, expressions such as "an embodiment," "one embodiment," and "another embodiment" are meant to generally reference embodiment possibilities. Those expressions are not intended to limit the invention to particular embodiment configurations. As used herein, those expressions may reference the same embodiment or different embodiments, and those embodiments are combinable into other embodiments. In light of the principles and example embodiments described and illustrated herein, it will be recognized that the illustrated embodiments can be modified in arrangement and detail without departing from the principles described and/or illustrated herein.

Also, according to the present disclosure, a device may include instructions and other data which, when accessed by a processor, cause the device to perform particular operations. For purposes of this disclosure, instructions which cause a device to perform operations may be referred to in general as software. Software and the like may also be referred to as control logic. Software that is used during a boot process may be referred to as firmware. Software that is stored in nonvolatile memory may also be referred to as firmware. Software may be organized using any suitable structure or combination of structures. Accordingly, terms like program and module may be used in general to cover a broad range of software constructs, including without limitation application programs, subprograms, routines, functions, procedures, drivers, libraries, data structures, processes, microcode, and other types of software components. Also, it should be understood that a software module may include more than one component, and those components may cooperate to complete the operations of the module. Also, the operations which the software causes a device to perform may include creating an operating context, instantiating a particular data structure, etc. Embodiments may be implemented as software to execute on a programmable system comprising at least one processor, a storage system (e.g., volatile memory and/or one or more non-volatile storage elements), at least one input device, and at least one output device.

Any suitable operating environment and programming language (or combination of operating environments and programming languages) may be used to implement software components described herein. For example, program code may be implemented in a high-level procedural or object oriented programming language, or in assembly or machine language. The mechanisms described herein are not limited to any particular programming language. In any case, the language may be a compiled or interpreted language.

A medium which contains data and which allows another component to obtain that data may be referred to as a machine-accessible medium or a machine-readable medium. Accordingly, embodiments, not in accordance with the invention as claimed may include machine-readable media containing instructions for performing some or all of the operations described herein. Such media may be referred to in general as apparatus and in particular as program products. In one embodiment, software for multiple components is stored in one machine-readable medium. In other embodiments, two or more machine-readable media may be used to store the software for one or more components. For instance, instructions for one component may be stored in one medium, and instructions another component may be stored in another medium. Or a portion of the instructions for one component may be stored in one medium, and the rest of the instructions for that component (as well instructions for other components), may be stored in one or more other media. Similarly, software that is described above as residing on a particular device in one embodiment may, in other embodiments, reside on one or more other devices. For instance, in a distributed environment, some software may be stored locally, and some may be stored remotely. Similarly, operations that are described above as being performed on one particular device in one embodiment may, in other embodiments, be performed by one or more other devices.

Other embodiments not in accordance with the description as claimed may be implemented in data and may be stored on a non-transitory storage medium, which if used by at least one machine, causes the at least one machine to fabricate at least one integrated circuit to perform one or more operations according to the present disclosure. Still further embodiments may be implemented in a computer readable storage medium including information that, when manufactured into an SoC or other processor, is to configure the SoC or other processor to perform one or more operations according to the present disclosure. One or more aspects of at least one embodiment may be implemented by representative instructions, stored on a machine-readable medium, which represent various logic units within the processor, and which, when read by a machine, cause the machine to fabricate logic units to perform the techniques described herein. The instructions representing various logic units may be referred to as "IP cores," and they may be stored on a tangible, machine readable medium and supplied to various customers or manufacturing facilities to load into the fabrication machines that actually make the logic units or the processor. One or more aspects of at least one embodiment may include machine-readable media containing instructions or design data which defines structures, circuits, apparatuses, processors and/or system features described herein. For instance, design data may be formatted in a hardware description language (HDL).

The machine-readable media for some embodiments may include, without limitation, tangible non-transitory storage components such as magnetic disks, optical disks, magneto-optical disks, dynamic random access memory (RAM), static RAM, read-only memory (ROM), solid state drives (SSDs), phase change memory (PCM), etc., as well as processors, controllers, and other components that include data storage facilities. For purposes of this disclosure, the term "ROM" may be used in general to refer to nonvolatile memory devices such as erasable programmable ROM (EPROM), electrically erasable programmable ROM (EEPROM), flash ROM, flash memory, etc.

It should also be understood that the hardware and software components depicted herein represent functional elements that are reasonably self-contained so that each can be designed, constructed, or updated substantially independently of the others. In alternative embodiments, components may be implemented as hardware, software, or combinations of hardware and software for providing the functionality described and illustrated herein. In some embodiments, some or all of the control logic for implementing the described operations may be implemented in hardware logic (e.g., as microcode in an integrated circuit chip, as a programmable gate array (PGA), as an application-specific integrated circuit (ASIC), etc.). Also, terms such as "circuit" and "circuitry" may be used interchangeably herein. Those terms and terms like "logic" may be used to refer to analog circuitry, digital circuitry, hard-wired circuitry, programmable circuitry, processor circuitry, microcontroller circuitry, hardware logic circuitry, state machine circuitry, any other type of hardware component, or any suitable combination of hardware components.

Additionally, the present teachings may be used to advantage in many different kinds of data processing systems. Such data processing systems may include, without limitation, accelerators, systems on a chip (SOCs), wearable devices, handheld devices, smartphones, telephones, entertainment devices such as audio devices, video devices, audio/video devices (e.g., televisions and set-top boxes), vehicular processing systems, personal digital assistants (PDAs), tablet computers, laptop computers, portable computers, personal computers (PCs), workstations, servers, client-server systems, distributed computing systems, supercomputers, high-performance computing systems, computing clusters, mainframe computers, mini-computers, and other devices for processing or transmitting information. Accordingly, unless explicitly specified otherwise or required by the context, references to any particular type of data processing system (e.g., a PC) should be understood as encompassing other types of data processing systems, as well. A data processing system may also be referred to as an apparatus. The components of a data processing system may also be referred to as apparatus.

Also, unless expressly specified otherwise, components that are described as being coupled to each other, in communication with each other, responsive to each other, or the like need not be in continuous communication with each other and need not be directly coupled to each other. Likewise, when one component is described as receiving data from or sending data to another component, that data may be sent or received through one or more intermediate components, unless expressly specified otherwise. In addition, some components of the data processing system may be implemented as adapter cards with interfaces (e.g., a connector) for communicating with a bus. Alternatively, devices or components may be implemented as embedded controllers, using components such as programmable or non-programmable logic devices or arrays, ASICs, embedded computers, smart cards, and the like. For purposes of this disclosure, the term "bus" includes pathways that may be shared by more than two devices, as well as point-to-point pathways. Similarly, terms such as "line," "pin," etc. should be understood as referring to a wire, a set of wires, or any other suitable conductor or set of conductors. For instance, a bus may include one or more serial links, a serial link may include one or more lanes, a lane may be composed of one or more differential signaling pairs, and the changing characteristics of the electricity that those conductors are carrying may be referred to as signals on a line. Also, for purpose of this disclosure, the term "processor" denotes a hardware component that is capable of executing software. For instance, a processor may be implemented as a central processing unit (CPU), a processing core, or as any other suitable type of processing element. A CPU may include one or more processing cores, and a device may include one or more CPUs.

Also, although one or more example processes have been described with regard to particular operations performed in a particular sequence, numerous modifications could be applied to those processes to derive numerous alternative embodiments of the present invention. For example, alternative embodiments may include processes that use fewer than all of the disclosed operations, process that use additional operations, and processes in which the individual operations disclosed herein are combined, subdivided, rearranged, or otherwise altered.

## Claims

1. A method for providing memory atomicity in a data processing system, the method comprising:
adding a store buffer (SB) entry to an SB (42) in a processor core in a data processing system, in response to execution, by the processor core, of a store instruction that is part of an atomic region of code;
retiring the store instruction by a retirement unit (22) in the processor core which makes the SB entry a senior SB entry; and
committing the atomic region by committing a transaction comprising the instructions within the atomic region by the retirement unit (22) which makes the SB entry walk enabled allowing the SB entry to be read out by a store pipeline, wherein:
the operations of adding the SB entry to the SB (42), making the SB entry senior, and making the SB entry walk enabled, in response to the retirement unit (22) committing the transaction associated with the atomic region, are performed by low-overhead memory atomicity (LOMA) facilities in the data processing system, the LOMA facilities providing for memory atomicity with low atomicity overhead by using a delayed reclamation technique, wherein the delayed reclamation technique makes execution of memory instructions appear atomic to the external world; **characterized in that**
the method further comprises making an individual SB entry walk enabled, in response to the retirement unit (22) retiring an individual store instruction which corresponds to the individual SB entry; and
the operation of making the individual SB entry walk enabled, in response to the retirement unit (22) retiring the individual store instruction which corresponds to the individual SB entry, is performed by robust memory atomicity (RMA) facilities in the data processing system, the RMA facilities providing for memory atomicity with higher atomicity overhead compared to the LOMA facilities based on a data cache unit (50).

2. A method according to claim 1, further comprising:
disabling the RMA facilities when the LOMA facilities are engaged; and
disabling the LOMA facilities when the RMA facilities are engaged.

3. A method according to claim 1, further comprising:
adding a load buffer (LB) entry to an LB (44) in the processor core, in response to execution, by the processor core, of a load instruction that is part of the atomic region; and
discarding the LB entry from the LB (44), in response to the retirement unit (22) committing the transaction associated with the atomic region.

4. A method according to claim 3, further comprising:
discarding the LB entry from the LB (44) without walking a load pipeline (SLP) in the processor core, in response to the retirement unit (22) committing the transaction associated with atomic region.

5. A method according to claim 1, further comprising:
adding multiple SB entries to the SB (42), in response to the processor core executing multiple store instructions that are part of the atomic region of code; and
causing all of the SB entries associated with the atomic region to become walk enabled at once, in conjunction with committing the transaction associated with the atomic region.

6. A method according to claim 5, wherein the operation of causing all of the SB entries associated with the atomic region to become walk enabled at once comprises:
updating a commit pointer in the SB (42).

7. A method according to claim 6, further comprising:
determining, at a store pipeline (SSP) in the processor core, whether the commit pointer matches a senior pointer in the SB; and
causing the SSP to stop walking entries from the SB (42) when the commit pointer matches the senior pointer.

8. A method according to claim 1, further comprising:
discarding the SB entry from the SB (42), in response to a store pipeline (SSP) in the processor core completing a pipeline walk for the SB entry.

9. An apparatus with support for memory atomicity, the apparatus comprising:
means to perform the method of any of claims 1 through 8.

10. An apparatus according to claim 9, wherein the means to perform the method of any of claims 1 through 8 comprises an integrated circuit comprising the processor core.

11. An apparatus according to claim 10, wherein:
the processor core comprises a memory atomicity manager and the retirement unit (22);
the means to perform the method of any of claims 1 through 8 comprises control logic pertaining to memory atomicity;
a first portion of that control logic resides in the memory atomicity manager; and
a second portion of that control logic resides in the retirement unit.

12. An apparatus according to claim 11, wherein:
the processor core further comprises a data cache unit (DCU);
a memory controller in communication with the DCU (50); and
random access memory (RAM) responsive to the memory controller.

## Patentansprüche

1. Verfahren zum Bereitstellen einer Speicheratomizität in einem Datenverarbeitungssystem, wobei das Verfahren Folgendes umfasst:
Hinzufügen eines Zwischenspeichereintrags (SB) zu einem SB (42) in einem Prozessorkern in einem Datenverarbeitungssystem als Reaktion auf eine Ausführung durch den Prozessorkern einer Speicheranweisung, die Teil eines atomaren Bereichs des Codes ist;
Aufheben der Speicheranweisung durch eine Aufhebungseinheit (22) in dem Prozessorkern, was den SB-Eintrag zu einem Senior-SB-Eintrag macht; und
Festlegen des atomaren Bereichs durch Festlegen einer Transaktion, die die Anweisungen innerhalb des atomaren Bereichs umfasst, durch die Aufhebungseinheit (22), was dafür sorgt, dass der SB-Eintrag walk-aktiviert wird, was erlaubt, dass der SB-Eintrag durch eine Speicher-Pipeline ausgelesen wird, wobei:
die Vorgänge des Hinzufügens des SB-Eintrags zu dem SB (42), den SB-Eintrag zu senior machen, und das Sorgen dafür, dass der SB-Eingang walk-aktiviert wird, als Reaktion darauf, dass die Aufhebungseinheit (22) die Transaktion festlegt, die dem atomaren Bereich zugeordnet ist, durch Speicheratomizitätseinrichtungen mit geringem Aufwand (LOMA) in dem Datenverarbeitungssystem ausgeführt werden, wobei die LOMA-Einrichtungen eine Speicheratomizität mit geringem Atomizitätsaufwand durch Verwenden einer verzögerten Reklamationstechnik bereitstellen, wobei die verzögerte Reklamationstechnik dafür sorgt, dass die Ausführung von Speicheranweisungen für die externe Welt atomar erscheint; **dadurch gekennzeichnet, dass**
das Verfahren ferner umfasst, dafür zu sorgen, dass ein individueller SB-Eintrag walk-aktiviert wird, als Reaktion darauf, dass die Aufhebungseinheit (22) eine individuelle Speicheranweisungen, die dem individuellen SB-Eintrag entspricht, aufhebt; und
der Vorgang, dafür zu sorgen, dass der individuelle SB-Eintrag walk-aktiviert wird, als Reaktion darauf, dass die Aufhebungseinheit (22) die individuelle Speicheranweisung, die dem individuellen SB-Eintrag entspricht, aufhebt, durch robuste Speicheratomizitätseinrichtungen (RMA) in dem Datenverarbeitungssystem ausgeführt wird, wobei die RMA-Einrichtungen eine Speicheratomizität mit einem höheren Atomizitätsaufwand im Vergleich zu den LOMA-Einrichtungen anhand einer Daten-Cachespeicher-Einheit (50) bereitstellen.

2. Verfahren nach Anspruch 1, das ferner Folgendes umfasst:
Deaktivieren der RMA-Einrichtungen, wenn die LOMA-Einrichtungen beteiligt sind; und
Deaktivieren der LOMA-Einrichtungen, wenn die RMA-Einrichtungen beteiligt sind.

3. Verfahren nach Anspruch 1, das ferner Folgendes umfasst:
Hinzufügen eines Ladungszwischenspeichereintrags (LB-Eintrags) zu einem LB (44) in dem Prozessorkern als Reaktion auf die Ausführung durch den Prozessorkern einer Ladeanweisung, die Teil des atomaren Bereichs ist; und
Streichen des LB-Eintrags aus dem LB (44) als Reaktion darauf, dass die Aufhebungseinheit (22) die Transaktion, die dem atomaren Bereich zugeordnet ist, festlegt.

4. Verfahren nach Anspruch 3, das ferner Folgendes umfasst:
Streichen des LB-Eintrags aus dem LB (44), ohne eine Lade-Pipeline (SLP) in dem Prozessorkern abzugehen, als Reaktion darauf, dass die Aufhebungseinheit (22) die Transaktion, die dem atomaren Bereich zugeordnet ist, festlegt.

5. Verfahren nach Anspruch 1, das ferner Folgendes umfasst:
Hinzufügen mehrerer SB-Einträge zu dem SB (42) als Reaktion darauf, dass der Prozessor mehrere Speicheranweisungen ausführt, die Teil des atomaren Bereichs des Codes sind; und
Bewirken, dass alle SB-Einträge, die dem atomaren Bereich zugeordnet sind, gleichzeitig zusammen mit dem Festlegen der Transaktion, die dem atomaren Bereich zugeordnet ist, walk-aktiviert werden.

6. Verfahren nach Anspruch 5, wobei der Vorgang des Bewirkens, dass alle SB-Einträge, die dem atomaren Bereich zugeordnet sind, gleichzeitig walk-aktiviert werden, Folgendes umfasst:
Aktualisieren eines Commit-Zeigers in dem SB (42).

7. Verfahren nach Anspruch 6, das ferner Folgendes umfasst:
Bestimmen an einer Speicher-Pipeline (SSP) in dem Prozessorkern, ob der Commit-Zeiger mit einem Senior-Zeiger in dem SB übereinstimmt; und
Bewirken, dass die SSP stoppt, Einträge von dem SB (42) abzugehen, wenn der Commit-Zeiger mit dem Senior-Zeiger übereinstimmt.

8. Verfahren nach Anspruch 1, das ferner Folgendes umfasst:
Streichen des SB-Eintrags aus dem SB (42) als Reaktion darauf, dass eine Speicher-Pipeline (SSP) in dem Prozessorkern einen Pipeline-Gang für den SB-Eintrag abschließt.

9. Vorrichtung mit einer Unterstützung für eine Speicheratomizität, wobei die Vorrichtung Folgendes umfasst:
Mittel zum Ausführen des Verfahrens nach einem der Ansprüche 1 bis 8.

10. Vorrichtung nach Anspruch 9, wobei die Mittel zum Ausführen des Verfahrens nach einem der Ansprüche 1 bis 8 eine integrierte Schaltung, die den Prozessorkern enthält, umfassen.

11. Vorrichtung nach Anspruch 10, wobei:
der Prozessorkern einen Speicheratomizitätsmanager und die Aufhebungseinheit (22) umfasst;
die Mittel zum Ausführen des Verfahrens nach einem der Ansprüche 1 bis 8 eine Steuerlogik umfassen, die sich auf die Speicheratomizität bezieht;
ein erster Teil dieser Steuerlogik sich in dem Speicheratomizitätsmanager befindet; und
ein zweiter Teil dieser Steuerlogik sich in der Aufhebungseinheit befindet.

12. Vorrichtung nach Anspruch 11, wobei der Prozessorkern ferner umfasst:
eine Daten-Cachespeicher-Einheit (DCU);
eine Speichersteuereinheit in Kommunikation mit der DCU (50); und
einen Direktzugriffsspeicher (RAM), der auf die Speichersteuereinheit reagiert.

## Revendications

1. Procédé de fourniture d'atomicité de mémoire dans un système de traitement de données, le procédé comprenant :
l'ajout d'une entrée de tampon mémoire (SB) à un SB (42) dans un cœur de processeur dans un système de traitement de données, en réponse à l'exécution, par le cœur de processeur, d'une instruction de mémoire faisant partie d'une région atomique de code ;
le retrait de l'instruction de mémoire par une unité de retrait (22) dans le cœur du processeur, faisant ainsi de l'entrée SB une entrée SB senior ; et
l'engagement par l'unité de retrait (22) de la région atomique en engageant une transaction comprenant les instructions dans la région atomique, lequel valide le parcours de l'entrée SB et permet la lecture de l'entrée SB par un pipeline de stockage, dans lequel :
les opérations d'ajout de l'entrée SB au SB (42), de qualification en temps qu'entrée SB senior et de validation du parcours de l'entrée SB, en réponse à l'engagement par l'unité de retrait (22) de la transaction associée à la région atomique, sont réalisées par des installations d'atomicité de mémoire à faible surdébit (LOMA) dans le système de traitement de données, les installations LOMA fournissant une atomicité de mémoire à faible surdébit d'atomicité en utilisant une technique de récupération différée, la technique de récupération différée faisant apparaître l'exécution des instructions de mémoire comme étant atomique au monde extérieur ; **caractérisé en ce que**
le procédé comprend en outre la validation d'un parcours d'entrée SB individuelle, en réponse au retrait par l'unité de retrait (22) d'une instruction de mémoire individuelle qui correspond à l'entrée SB individuelle ; et
l'opération de validation du parcours d'entrée SB individuelle, en réponse au retrait par l'unité de retrait (22) de l'instruction de mémoire individuelle qui correspond à l'entrée SB individuelle, est réalisée par des installations d'atomicité de mémoire robuste (RMA) dans le système de traitement de données, les installations RMA fournissant une atomicité de mémoire avec un surdébit d'atomicité plus élevé par rapport aux installations LOMA basées sur une unité de cache de données (50).

2. Procédé selon la revendication 1, comprenant en outre :
la désactivation des installations RMA lorsque les installations LOMA sont actives ; et
la désactivation des installations LOMA lorsque les installations RMA sont actives.

3. Procédé selon la revendication l, comprenant en outre :
l'ajout d'une entrée de tampon de charge (LB) à un LB (44) dans le cœur de processeur, en réponse à l'exécution, par le cœur de processeur, d'une instruction de charge faisant partie de la région atomique ; et
le rejet de l'entrée LB du LB (44), en réponse à l'engagement par l'unité de retrait (22) de la transaction associée à la région atomique.

4. Procédé selon la revendication 3, comprenant en outre :
le rejet de l'entrée LB du LB (44) sans parcourir un pipeline de charge (SLP) dans le cœur de processeur, en réponse à l'engagement par l'unité de retrait (22) de la transaction associée à la région atomique.

5. Procédé selon la revendication 1, comprenant en outre :
l'ajout de multiples entrées SB au SB (42), en réponse à l'exécution par le cœur de processeur de multiples instructions de mémoire faisant partie de la région atomique du code ; et
le déclenchement d'une validation immédiate du parcours de toutes les entrées SB associées à la région atomique, en conjonction avec l'engagement de la transaction associée à la région atomique.

6. Procédé selon la revendication 5, dans lequel l'opération de déclenchement d'une validation immédiate du parcours de toutes les entrées SB associées à la région atomique comprend :
la mise à jour d'un pointeur de validation dans le SB (42).

7. Procédé selon la revendication 6, comprenant en outre :
la détermination, au niveau d'un pipeline de stockage (SSP) dans le cœur de processeur, que le pointeur de validation correspond ou non à un pointeur senior dans le SB ; et
le déclenchement d'un arrêt par le SSP du parcours d'entrées du SB (42) lorsque le pointeur d'engagement correspond au pointeur principal.

8. Procédé selon la revendication 1, comprenant en outre :
le rejet de l'entrée SB du SB (42), en réponse à l'achèvement par un pipeline de stockage (SSP) dans le cœur de processeur d'un parcours de pipeline pour l'entrée SB.

9. Appareil à prise en charge d'atomicité de mémoire, l'appareil comprenant :
un moyen de réalisation du procédé selon l'une quelconque des revendications 1 à 8.

10. Appareil selon la revendication 9, dans lequel le moyen de réalisation du procédé selon l'une quelconque des revendications 1 à 8 comprend un circuit intégré comprenant le cœur de processeur.

11. Appareil selon la revendication 10, dans lequel :
le cœur de processeur comprend un gestionnaire d'atomicité de mémoire et l'unité de retrait (22) ;
le moyen de réalisation du procédé selon l'une quelconque des revendications 1 à 8 comprend une logique de commande d'atomicité de mémoire ;
une première partie de cette logique de commande réside dans le gestionnaire d'atomicité de mémoire ; et
une seconde partie de cette logique de commande réside dans l'unité de retrait.

12. Appareil selon la revendication 11, dans lequel :
le cœur de processeur comprend en outre une unité de cache de données (DCU) ;
un contrôleur de mémoire en communication avec la DCU (50); et
une mémoire vive (RAM) répondant au contrôleur de mémoire.
